# EUROPEAN PATENT APPLICATION

(11) **EP 2 328 095 A1**
(43) Date of publication of application: **01.06.2011**
(21) Application number: 09811365.7
(22) Date of filing: 14.07.2009
(51) Int. Cl.: G06F 15/167, G06F 9/52

(54) **CONTROL SOFTWARE FOR DISTRIBUTED CONTROL, AND ELECTRONIC CONTROL DEVICE**

(30) Priority: 03.09.2008 JP 2008225431
(71) Applicant: Hitachi Automotive Systems, Ltd., Hitachinaka-shi Ibaraki 312-8502 (JP)
(72) Inventor: NARISAWA Fumio, Hitachi-shi Ibaraki 319-1292 (JP); HASHIMOTO Koji, Hitachi-shi Ibaraki 319-1292 (JP); YOSHIMURA Kentaro, Hitachi-shi Ibaraki 319-1292 (JP)
(74) Representative: Beetz & Partner
(86) International application number: PCT/JP2009/062730
(87) International publication number: WO 2010/026836

(57) **Abstract**

The control software which can improve the development efficiency of a control system using a plurality of processing units by absorbing the difference due to the data exchange through a shared storage area is provided.

The control software includes the same interface as the software part for network communication, and by making, as a part, the processing software for reading and writing the data from and into the storage area shared by said plurality of the processing units, the data exchange by the shared storage area is handled as one of communication physical layers thereby to construct a control system.

## Description

### TECHNICAL FIELD

This invention relates to an electronic control device and the control software incorporated in the electronic control device, or in particular, to the distributed control of a plurality of electronic control devices for an automotive vehicle.

### BACKGROUND ART

A microcontroller (hereinafter referred to as "the micro") having a central processing unit, a ROM, a RAM and an input/output signal processor is used as a control unit for controlling the engine of the automotive vehicle. The software incorporated in the micro is generally configured of an application program for executing the control process, a device driver for input/output operation and an operating system (OS) to perform the control operation aimed at an object of control.

With the increased size of the software in recent years, it has become difficult to develop all of the application program and the input/output device control program for an individual control system. Thus, a method of configuring and reusing the software as small units of parts or a method of hierarchicalising the software parts and localizing the changed portions have come to be employed. Further, a development method is employed in which these software parts are accumulated as assets, and combined in accordance with the configuration of the devices of an electronic system to be developed and the configuration of a network.

Also, a distributed operating system (distributed OS) is available as a method of constructing a system independently of the hardware based on a distributed system. The distributed OS, which manages the whole system configured of a plurality of processing units, distributes a process constituting a unit for program execution is appropriately distributed to each processing unit (see JP-A-10-243004, for example).

In an ordinary method for improving the development efficiency of the distributed system, the system is separated into a host layer of the network independent of the physical layer for communication protocol and signal processing and a low-order layer dependent on the physical layer to absorb the physical difference of the networks. By hiding the difference of the physical layers in this way, these parts can be designed flexibly in an actual system configuration (see Patent No. 3460593, for example).

### PRIOR ART DOCUMENTS

### PATENT DOCUMENTS

Patent Document 1: JP-A-10-243004
Patent Document 2: Japan Patent No. 3460593

### SUMMARY OF THE INVENTION

### PROBLEM TO BE SOLVED BY THE INVENTION

In recent years, a micro having a plurality of processing units mounted on a single micro package has come to find practical application as a method of improving the processing speed of the micro. On the system having a plurality of processing units, the software are operated in parallel to each other on the respective processing units, and the data required to be exchanged between the processing unit are supplied and received on a shared storage area such as a dual-port RAM.

In this case, the processing units are operated independently of each other. The data is liable to be destroyed in the case where a second processing performs the read operation before a first processing unit has yet to write data in the second processing unit completely, the write operation is performed in multiple ways, or the second processing unit performs the write operation partially midway of the read operation by the first processing unit. In such a case, the system fails to perform the data exchange operation in the manner intended in design stage and develops a trouble. Therefore, this confliction between data is required to be avoided.

A high real time characteristic is required in the field of vehicle control. The conventional software assets are not necessarily developed for a distributed system, and in many cases, designed on the assumption of a fixed scheduling by allocation to a single processing unit. For vehicle control, therefore, the simple arrangement in the distributed OS departs from the originally intended operation, and greatly limits the cases where the distributed OS can be utilized effectively. To reuse the existing software assets, therefore, the individual processing unit is required to include a unique real-time OS and each software part requires a fixed scheduling on the particular OS. Further, in the vehicle control system, the operation is performed in real time, and therefore, a process delay has a great adverse effect on the performance and reliability of the system. For this reason, a mechanism for the information system, though flexible but unable to guarantee the real-time characteristic, cannot be employed.

The object of this invention is to improve the development efficiency of a control system configured of a plurality of processing units, wherein the trouble which otherwise might be caused by the confliction between the plurality of the processing units is eliminated, the real-time characteristic is guaranteed by allocating each software part to the real-time OS operating for each processing unit, and the difference due to the data exchange through a shared storage area is absorbed in the same manner that the difference between the communication methods is absorbed by hiding the difference of the configuration for exchanging the data through a shared storage area between a plurality of processing units like in the physical layer of the network.

### MEANS FOR SOLVING THE PROBLEM

In order to achieve the object described above, there is constructed a control system having the same interface as the software parts for network communication, the processing software for reading/writing the data in a shared storage area having a confliction avoiding means is implemented as a part, and the data exchange by the shared storage area is handled as one communication physical layer.

### ADVANTAGES OF THE INVENTION

By generating a control system having the configuration described above, the conventional software assets can be reused while at the same time eliminating the trouble of confliction liable to occur in the shared storage area. Therefore, the number of the steps of developing a control system having a plurality of processing units can be reduced without adversely affecting the reliability.
The other objects, features and advantages of the invention will be made apparent by the description of embodiments of the invention taken below in conjunction with the accompanying drawings.

### BRIEF DESCRIPTION OF THE DRAWINGS

Fig. 1 is a diagram showing a hardware configuration.
Fig. 2 is a diagram showing a hierarchical structure of the software.
Fig. 3 is a diagram showing the hardware and the data flow.
Fig. 4 is a diagram showing the execution steps using the CAN communication.
Fig. 5 is a diagram showing the execution steps using the communication by a shared memory.
Fig. 6 is a diagram showing the configuration of a shared memory driver.
Fig. 7 is a diagram showing the configuration of a CAN communication driver.
Fig. 8 is a diagram showing the data flow for the CAN communication.
Fig. 9 is a diagram showing the test-and-set process.
Fig. 10 is a diagram showing the data flow for the multicore combined with the communication.

### MODE FOR CARRYING OUT THE INVENTION

### EMBODIMENT 1

A first example of an embodiment of this invention is explained below.

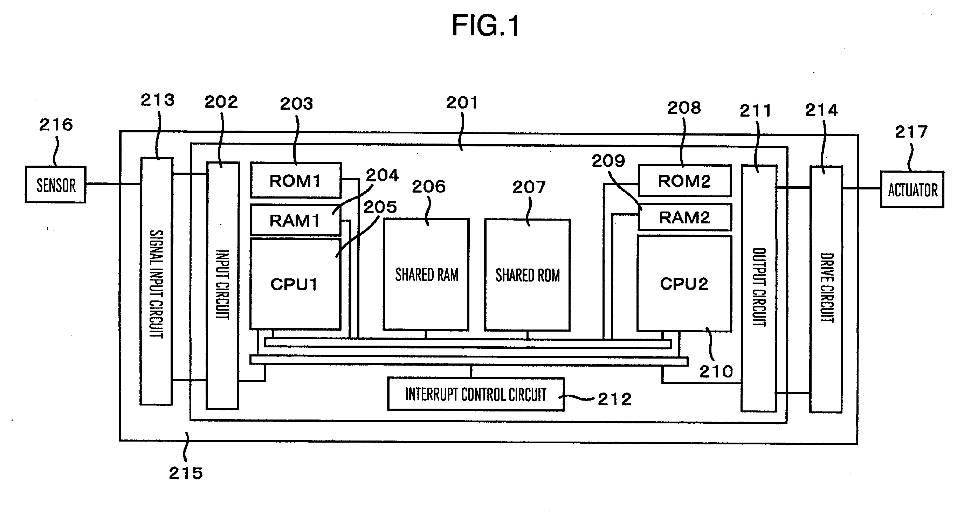

Fig. 1 shows the configuration of an automotive engine control system constituting one of the control systems according the invention. A control unit 215 is configured of a first central processing unit (CPU) 205, a second CPU 210, an interrupt control circuit 212, a first read-only memory (ROM) 203, a first volatile random access memory (RAM) 204, a second ROM 208, a second RAM 209, a common ROM 207 and a common RAM 206 shared by the CPU 1 and the CPU 2, an input circuit 202 and an output circuit 211.

Incidentally, the elements 202 to 212 may be either built in one device or implemented in different devices, respectively. This difference, however, has no special effect on the invention, and therefore, either configuration can be used. The control unit is connected with a sensor 216 as an object of control through a signal input circuit 213, and an actuator 217 through a drive circuit 214. These units are controlled by a micro 201. The control operation is performed by reading from and writing into the register of the input circuit 202 and the output circuit 211 from the constituent elements including the micro. The software describing the control method is incorporated in the ROMs 203, 208, 107 and the RAMs 204, 209, 206 on the control unit.

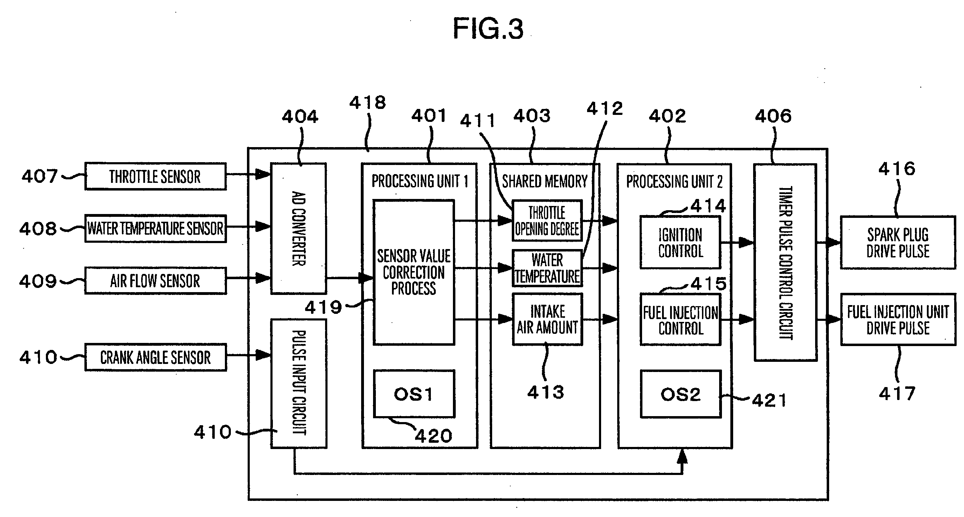

The hardware as shown in Fig. 3 is mounted on the control unit described above to exchange various data. This shows the basic configuration of the engine control system. An electronic control device 418 is intended to output a spark plug drive pulse 416 and a fuel injection device drive pulse 417 based on the engine states input from a throttle sensor 407, a water temperature sensor 408, an air flow sensor 409 and a crank angle sensor 410. Inside the electronic control device 418, a first CPU 401 and a second CPU 402 are connected to each other through a shared RAM 403 to retrieve the information from each sensor through an analog-digital converter (AD converter) 404 and a pulse input circuit 405 for fetching an input signal, and output a spark plug drive pulse 416 and a fuel injection device drive pulse 417 constituting actuator drive signals through a timer pulse output circuit 406. According to this embodiment, a sensor value correction process 419 for calculating the external physical value based on the sensor inputs and a first operating system (OS) 420 are allocated to the first CPU 401, while the process for carrying out the ignition control 414 and the fuel injection control 415 based on the engine rotation position obtained from the external physical amount and the crank angle sensor and a second operating system (OS) 421 are allocated to the second CPU 402. In this way, the processing load can be distributed. Also, the CPUs hold the throttle opening degree 411, the water temperature 412 and the intake air amount 413 constituting the information on the object to be controlled, which are obtained from each sensor on the shared RAM 403, thereby making it possible to exchange the information between the processing units.

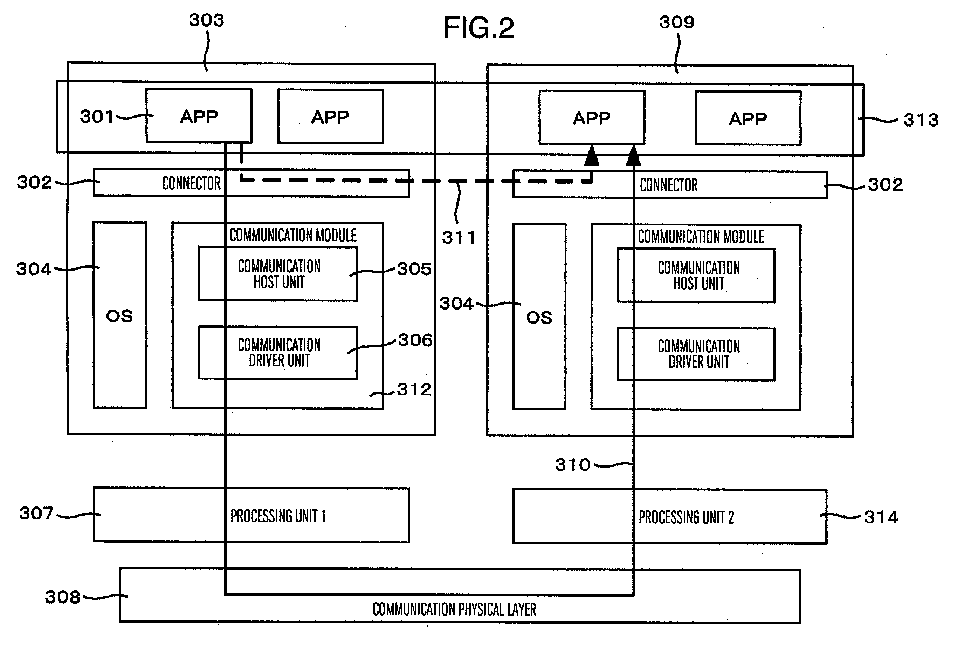

Fig. 2 is a diagram showing the hierarchical structure of the software executed by the control unit. The first software 303 is the basic software executed by the first CPU 307, and the second software 309 the basic software executed by the second CPU 314. The software 303 executed by the first CPU 307 is configured of a plurality of control application software parts 301 describing the logic to control the system, a part connector 302 for connecting and coordinating them, an operating system 304 for executing, by priority control, each task constituting a software execution unit and a communication module 312. The communication module 312 is configured of a communication host unit 305 for processing the communication data without dependence on the medium of the physical layer constituting a physical transmission means for communication and detecting various faults, and a communication driver unit 306 for controlling the hardware to transmit and receive specific data.

At the time of designing the control system, the parts are designed based on the physical and logical characteristics of the control software considering only the control application unit 313 and the part connector 302. In the process, the information on the configuration of the physical layer for communication in an electronic system is abstracted, and the design work conducted taking only the abstracted logical connection 311 between the parts into consideration. At the time of constructing the electronic system, the physical connection 310 considering the physical layer is packaged, so that the design of the control application software parts 301 and the configuration of the electronic system can be separated from each other, thereby making it possible to improve the software reusability.

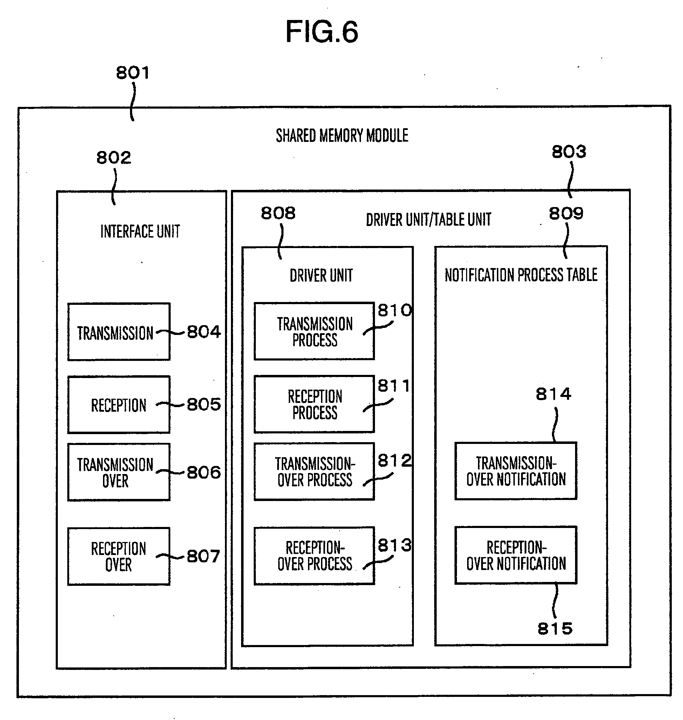

Fig. 6 shows the configuration of a shared memory module 801 constituting the communication driver unit 306 for communication through a shared memory. The shared memory module is configured of an interface unit 802 determining the method of access from an external unit and a driver unit/table unit 803 for reading/writing the data from and into an actual shared memory. The interface unit 802 has four interfaces including the transmission 802, the reception 805, the transmission over 806 and the reception over 807. The driver unit/table unit 803 includes a driver unit 806 and a notification process table 809, and a process corresponding to each interface specified by the interface unit 802 is arranged in the driver unit. Typically, these processes correspond to the function of the C language. The notification process table 809 is for registering the access destination of each notification process from an event such as an interrupt. Typically, the pointer of the function of the C language is registered, and in the case where an event occurs, the function of the pointer is executed. As an alternative, the jump-to function can be registered as a macro of the C language.

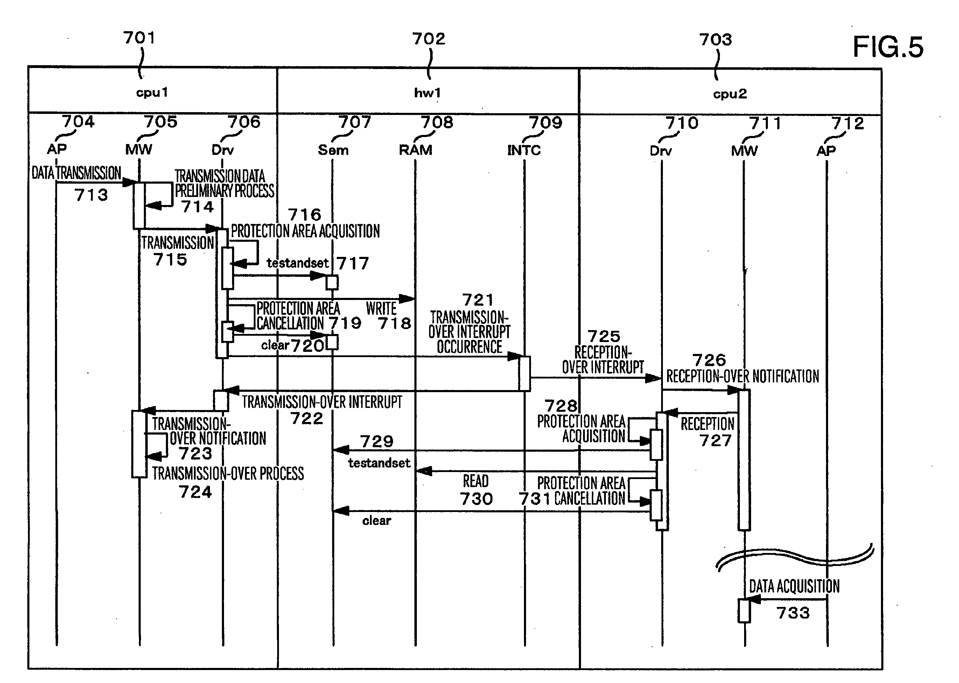

Fig. 5 shows the detail of the software processing steps using the configuration described above. The control application software 704, the communication host unit 705 and the communication driver unit 706 operate on the first CPU 701. A semaphore 707, a RAM 708 and an interrupt controller 709 exist in the hardware 702 shared by the CPUs. A communication driver unit 710, a communication host unit 711 and a control application software 712 operate in the second CPU 703.

Fig. 5 shows the detailed steps for exchanging the data, through the RAM 708 for storing the shared data, between the control application software 704 included in the first CPU 701 and the control application software 712 included in the second CPU 703 in the configuration described above.

First, a data transmission request 713 is issued from the control application software 704 to the communication host unit 705. The communication host unit 705 adjusts and allocates the transmission data length, and after executing the preliminary process 714 on the transmission data such as adjustment of the bit arrangement, issues a data transmission request 715 to the communication driver unit. The communication driver, in order to guarantee the exclusive access to the data on the RAM 708 shared by the first CPU 701 and the second CPU 703, executes the exclusion process of steps 716 to 720 using the semaphore 707. In the exclusion process, the test-and-set process 717 (described later) for the semaphore 707 is executed as a protection area acquisition process 716. After thus acquiring the right of access to a predetermined area of the shared RAM 708, the write operation 718 into the shared RAM 708 is performed, and the clear process 720 for the semaphore 707 is executed as the process of protection area cancellation 719 thereby to complete the exclusion process. Next, in order to notify the first CPU 701 and the second CPU 703 that the communication is over, a transmission-over interrupt 721 is generated by the interrupt controller 709. This is retrieved as a transmission-over interrupt 722 by the first CPU 701. During the interrupt process, a transmission-over notification 723 of the communication host unit 705 is accessed based on the transmission-over notification 814 registered in the communication driver unit 706, i.e. the notification process table 809 the shared memory module thereby to execute the transmission-over process 724. On the other hand, the reception-over interrupt 725 is retrieved by the second CPU 703 from the transmission-over interrupt occurrence 721 in the interrupt controller 709. During the interrupt process, the reception-over notification 726 of the communication host unit 711 is activated based on the reception-over notification 815 registered in the communication driver unit 710, i.e. the notification process table 809 of the shared memory module thereby to access the reception process 727 of the communication driver unit 710. Also during the reception process, the exclusion process of steps 728 to 732 is executed using the semaphore 707. First, the protection area acquisition process 728 executes the test-and-set process 729 (described later), and after acquiring the right to access the exclusive area, the data is read in step 730 from the RAM 708 and held in the communication host unit 711. During the protection region cancellation process 731, the cancellation process 732 for the semaphore 707 is executed. Finally, the control application software 712 issues a data acquisition request 733 to the communication host unit 711 and acquires the data.

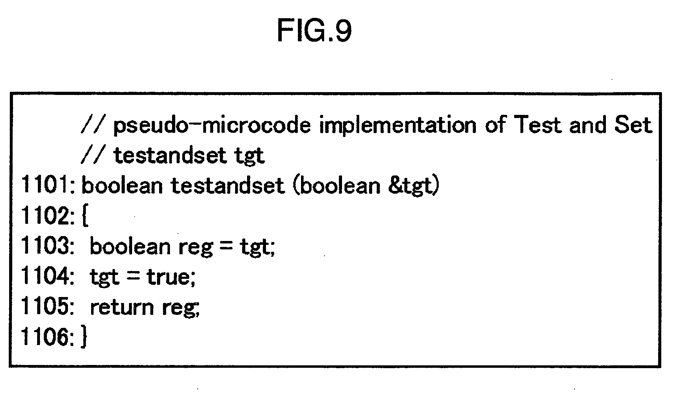

Also, in order to prevent the confliction for access to the data between a plurality of processing units operating in parallel, an exclusion process is required with hardware interposed. The test-and-set process 717 and the test-and-set process 729 shown in Fig. 5 are an exclusion process called the 'test and set' using the hardware described above. The series of processes are required to be executed atomically. The expression to execute a process atomically' is defined as a characteristic according to which the interrupt or the suspension of a processing unit by data access from other processing units is never accepted during the execution of the particular process. In this series of processes, an access to a variable or a register constituting the data to be written is received and the value thereof is provisionally held. Then, the variable or the register of the particular parameter is rewritten as 'true', and the register value provisionally held is returned. Fig. 9 shows a pseudo code by description in the C language. With the process by software alone, however, the atomic process described above cannot be executed, and this process is required to be packaged as hardware or a micro code on the dedicated hardware.

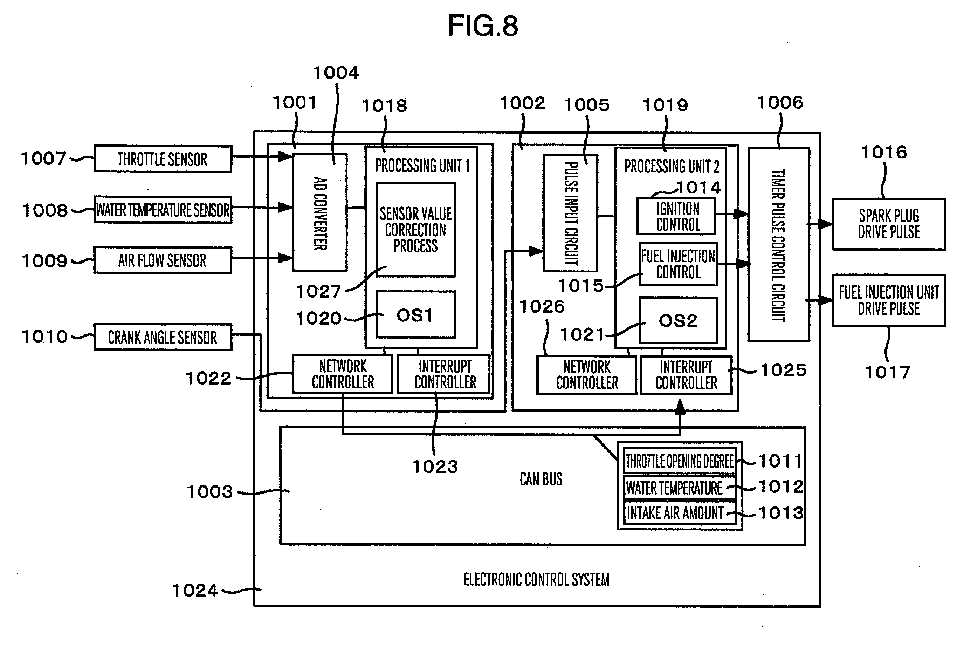

An example is shown below as a case in which the aforementioned system is transplanted to a vehicle having the hardware arranged in two controllers using the CAN communication. Fig. 8 shows the hardware configuration and the data flow thereof. An electronic control system 1024 is intended to output a spark plug drive pulse 1016 and a fuel injection device drive pulse 1017 based on the engine condition input from a throttle sensor 1007, a water temperature sensor 1008, an air flow sensor 1009 and a crank angle sensor 1010. The electronic control system 1024 has two electronic control devices 1001, 1002 connected to each other through a CAN bus 1003. The two electronic control devices 1001, 1002 can be arranged at places physically separate from each other. The first CPU 1018 retrieves the information from the various sensors (1007 to 1009) through an analog-digital converter (AD converter 1004) to fetch an input signal, while the second CPU 1019 retrieves the information on the crank angle sensor 1010 through the pulse input circuit 1005. Also, the spark plug drive pulse 1016 and the fuel injection device drive pulse 1017 constituting an actuator drive signal are output through a timer pulse output circuit 1006.

According to this embodiment, the sensor value correction process 1027 for calculating an external physical amount based on the sensor inputs and the first OS 1020 are allocated to the first CPU 1018. Also, the process for performing the ignition control 1014 and the fuel injection control 1015 based on the engine rotational position obtained from the crank angle sensor and the external physical amount and the second OS 1021 are allocated to the second CPU 1019. Also, between the control units, the information on the object to be controlled which is obtained from the sensors of the throttle opening degree 1011, the water temperature 1012 and the intake air amount 1013 on the CAN bus 1003 is transmitted from the first processing unit 1018 and received by the second processing unit 1019. In the hardware configuration described above, the software configuration to realize the engine control system can be implemented by the configuration shown in Fig. 2.

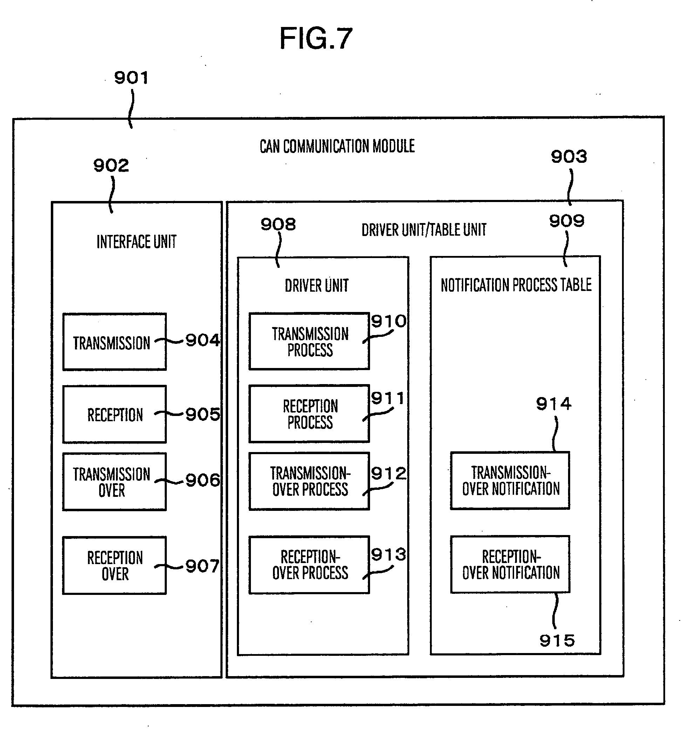

Fig. 7 shows an example of the configuration of the CAN communication module 901 as a package system corresponding to the CAN of the communication driver unit 306 for the CAN communication. The CAN communication module is configured of an interface unit 902 defining a method of access from an external device, and a driver unit/table unit 903 for performing the read/write operation from and into an actual shared memory. The interface unit 902 has four interfaces including the transmission 904, the reception 905, the transmission over 906 and the reception over 907. Also, the driver unit 908 has processes 910 to 913, and the notification process table 909 has notification processes 914, 915. This configuration is the same as that of the shared memory driver shown in Fig. 6, and by exchanging the software of this portion, the same control application software can be mounted on the systems having different hardware configurations.

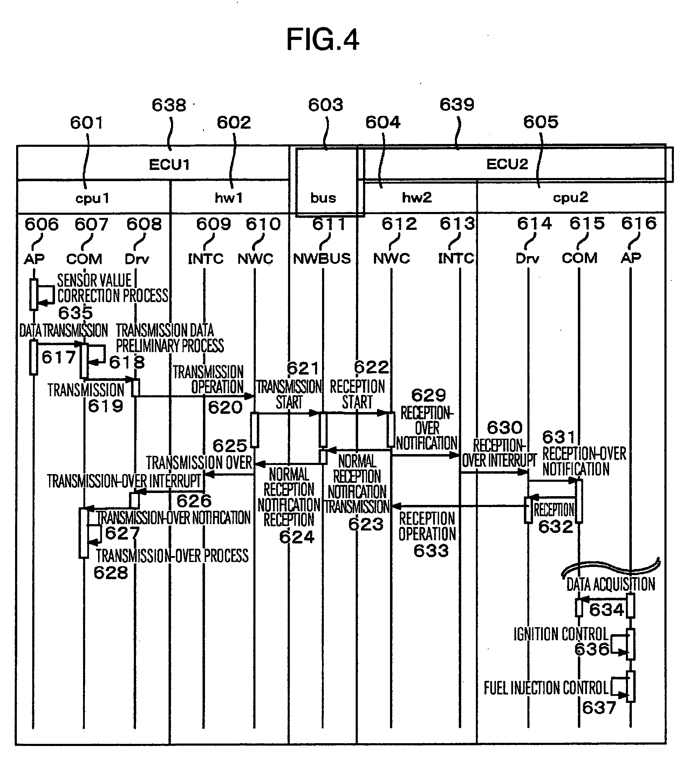

Fig. 4 shows the software processing steps in detail using the configuration described above. The control application software 606, the communication host unit 607 and the communication driver unit 608 operate on the first CPU 601, while the interrupt controller 609 and the network controller 610 exist in the peripheral hardware 602 on the first electronic control device 638. The communication driver unit 614, the communication host unit 615 and the control application software 616 operate in the second CPU 605 mounted on the second electronic control device 639. The network controller 612 and the interrupt controller 613 operate in the peripheral hardware 604.

With the configuration described above, the detailed steps are described whereby the data are exchanged, through the CAN bus 603, between the control application software 606 mounted in the first CPU 601 and the control application software 616 mounted in the second CPU 605. First, a data transmission request 617 is issued from the control application software 606 to the communication host unit 607. The communication host unit 607, after executing the preliminary process 618 on the transmission data such as the adjustment and allocation of the transmission data length and the adjustment of the bit arrangement, issues a data transmission request 619 to the communication driver unit 608. After the communication driver unit performs the transmission operation 620 to use the network controller 610 for transmission, the network controller 610 performs the operation of the transmission start 621. The data thus transmitted is connected to the second electronic control device 639 through the CAN bus 603. The network controller 612 mounted on the second electronic control device 639 detects the signal on the network and starts the reception 622. Upon complete reception, the reception notification is transmitted in step 623 if the reception is normal. The network controller 1610 on the first electronic control device 638 receives the normal reception notification in the reception step 624, and notifies the interrupt controller 609 that the transmission is normally completed. This is notified by the interrupt controller 609 to the first CPU 601 as an interrupt. The first CPU 601 executes, as the transmission-over interrupt 626, the transmission-over process 912 through the registered communication driver unit, i.e. the transmission-over interface 906 in the CAN communication module. From this process, the transmission-over process 628 is executed in the transmission-over notification process 627 of the communication host unit 607 registered as a transmission-over notification.

Upon complete reception from the CAN bus, on the other hand, the network controller 612 that has completed the reception on the second electronic control device 639 side notifies the interrupt controller 613 in step 629 that the reception is completed, and a notification is given from the interrupt controller 613 to the second CPU 605. Thus, the second CPU 605 starts the reception-over interrupt process 630, so that the reception-over notification 631 of the communication host unit registered is carried out. Next, the communication host unit 615 issues a data reception request 632 to the communication driver unit 614, and the communication driver unit 614 performs the receiving operation 633 of the network controller 612. Thus, the data is acquired and held in the communication host unit 615. The control application software executed on the second CPU 605 issues a data acquisition request 634, and based on this request, carries out the ignition control 636 and the fuel injection control 637.

In the software according to this embodiment, assume that the hardware configuration is changed physically to the coupling with a shared memory or the coupling by CAN communication. The interface unit 802 of the shared memory driver shown in Fig. 6 and the interface unit 902 of the CAN communication driver shown in Fig. 7 have the same interface. Further, in the processing steps thereof, the access points 715, 723, 726, 727 of the driver unit in the execution steps of the shared memory shown in Fig. 5 correspond to the access points 619, 627, 631, 632 of the driver unit in the CAN communication execution steps shown in Fig. 4. By replacing only the communication driver unit, therefore, the transplantation is made possible without changing the control application software. As a result, the number of steps for transplantation can be reduced.

### EMBODIMENT 2

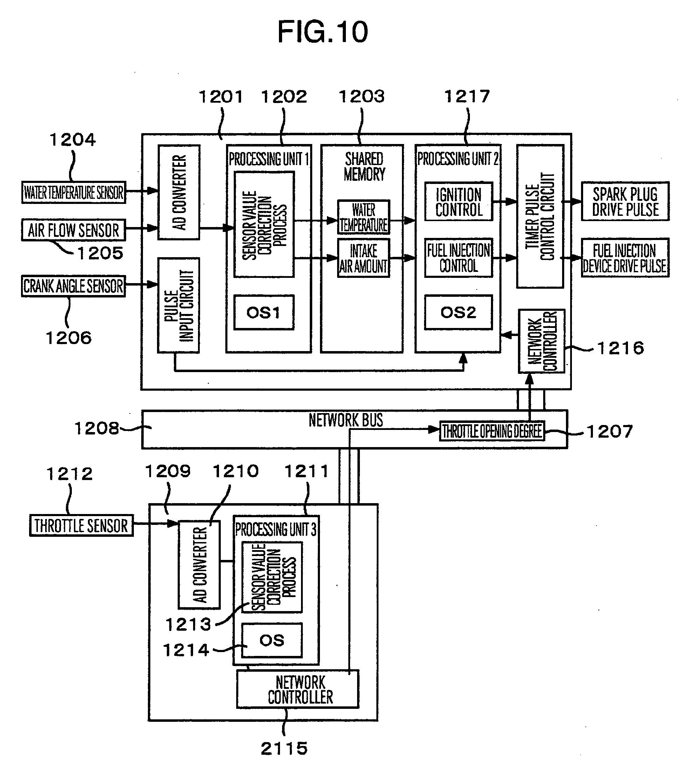

Next, a second embodiment of the invention is explained. The object of this embodiment is identical with that of the control system shown in Fig. 8 of the first embodiment, while the hardware configuration thereof is different. The configuration of this embodiment is shown in Fig. 10.

A control system is provided in which a first electronic control device 1201 having two processing units 1202, 1217 connected by a shared memory 1203 and a second electron control unit 1209 having one processing unit 1211 are connected to each other through a network bus 1208. In a second electronic control device 1209, the input value obtained from a throttle sensor 1212 is retrieved using an AD converter 1210, and the value of the throttle opening degree is calculated by a sensor value correction process 1213 as the software operated on the third processing unit 1211. The calculated value is sent onto a CAN bus 1208 through a network controller 1215. The first electronic control device 1201 acquires this data from the network controller 1216 to control the ignition and the fuel injection. Also, the first processing unit 1202 has the shared memory module shown in Fig. 6, while the second processing unit 1217 has the shared memory module shown in Fig. 6 and the CAN communication module shown in Fig. 7. Also, the third processor 1211 has the CAN communication module shown in Fig. 7. As in the first embodiment, the shared memory module shown in Fig. 6 and the CAN communication module shown in Fig. 7 have the same interface units 802, 902.

With the configuration according to this embodiment, the transplantation is made possible without changing the application software mounted on each processing unit. As a result, in the case where the load factor of the software operating between a plurality of processing units is varied, the control application software on the processing unit having a high load factor can be transplanted to a processing unit having a margin of capacity. Therefore, the configuration of the software optimized by the performance or capacity of the electronic control device can be changed without changing the control application software, thereby making it possible to reduce the number of steps of changing the software.
In spite of the embodiments described above, it is apparent to those skilled in the art that this invention is not limited to these embodiments, and can be variously modified and altered without departing from the spirit of the invention and the claims appended thereto.

### REFERENCE NUMERALS

- 201: Micro
- 202: Input circuit
- 203: First read-only memory
- 204: First volatile random access memory
- 205: First CPU
- 206: Shared volatile random access memory
- 207: Shared read-only memory
- 208: Second read-only memory
- 209: Second volatile random access memory
- 210: Second CPU
- 211: Output circuit
- 212: Interrupt control circuit
- 213: Input signal circuit
- 214: Drive circuit
- 215: Control unit
- 216: Sensor
- 217: Actuator
- 301: Control application software part
- 302: Part connector
- 303: First software
- 304: Operating system
- 305, 607, 615, 705, 711: Communication host unit
- 306, 608, 614, 706, 710: Communication driver unit
- 397, 401, 1018,: First processing unit
- 309: Second software
- 310: Physical connection
- 311: Logical connection
- 312, 901: Communication module
- 313: Application software unit
- 314, 402, 1019: Second processing unit
- 403: Shared memory
- 404, 1004: AD converter
- 405, 1005: Pulse input circuit
- 406, 1006: Timer pulse output circuit
- 407, 1007: Throttle sensor
- 408, 1008: Water temperature sensor
- 409, 1009: Air flow sensor
- 410, 1010: Crank angle sensor
- 411, 1011: Throttle opening degree
- 412, 1012: Water temperature
- 413: Intake air amount
- 414, 1014: Ignition control
- 415, 1015: Fuel injection control
- 416, 1016: Spark plug drive pulse
- 417, 1017: Fuel injection device drive pulse
- 418: Electronic control unit
- 419: Sensor value correction process
- 420, 1020: First OS
- 421, 1021: Second OS
- 601, 701: First CPU
- 602, 604: Peripheral hardware
- 603, 1003: CAN bus
- 605, 703: Second CPU
- 606, 616, 704: Control application software
- 609, 613, 709: Interrupt controller
- 610, 612: Network controller
- 617, 713: Request
- 618, 714: Preliminary process
- 619, 715: Transmission request
- 620: Transmission operation
- 621: Start
- 702: Hardware
- 707: Semaphore
- 708: RAM
- 712: Control application software
- 716: Acquisition process
- 717, 729: Test-and-set process
- 718: Write
- 719: Cancel
- 720: Clear
- 721: Transmission-over interrupt occurrence
- 722: Transmission-over interrupt
- 723, 814: Transmission-over notification
- 724: Transmission-over process
- 725: Reception-over interrupt
- 726, 815: Reception-over notification
- 727: Reception process
- 728: Protection area acquisition process
- 730: Read
- 731, 732: Cancellation process
- 733: Data acquisition request
- 801: Shared memory module
- 802, 902: Interface unit
- 803, 903: Driver unit/table unit
- 804, 904: Transmission
- 805, 905: Reception
- 806, 906: Transmission over
- 807, 907: Reception over
- 809: Notification process table
- 1001: First electronic control unit
- 1002: Second electronic control unit
- 1013: Air amount
- 1024: Electronic control system

## Claims

1. A control software operating on an electronic control device including a plurality of central processing units and a common storage memory shared by said plurality of the central processing units, **characterized in that**:
said control software has a basic software for executing the input/output for said electronic control device, and
said basic software reads and writes the data from and into said shared storage memory using the same interface as the interface used for communication on the network connected with said electronic control device.

2. The control software as described in Claim 1, **characterized in that** said basic software includes a shared memory module for reading and writing the data from and into said shared storage memory and a communication module for conducting communication with said network, and said shared memory module and said communication module has an interchangeable interface.

3. The control software as described in Claim 1, **characterized in that** said basic software includes a control application unit for controlling an object, said control application unit has a control application software part, and said control software includes a connector for connecting said control application software part and said basic software to each other.

4. The control software as described in Claim 1, **characterized in that** said basic software accesses a process guaranteeing that the process is not suspended by hardware.

5. The control software as described in Claim 1, **characterized in that** said basic software accesses a test-and-set instruction guaranteeing that the process is not suspended by hardware.

6. The control software as described in Claim 1, **characterized in that** said basic software includes a semaphore process for managing an exclusion process.

7. The control software as described in Claim 2, **characterized in that** said shared memory module includes an interface used for transmission and an interface used for reception.

8. The control software as described in Claim 2, **characterized in that** said shared memory module includes a table storing a pointer to the transmission-over process and a pointer to the reception-over process.

9. An electronic control device comprising a plurality of central processing units and a common memory shared by said plurality of the central processing units, **characterized in that**:
said electronic control device reads and writes data from and into said shared storage memory using the same interface as the interface used for communication through the network connected with said electronic control device.
